# EUROPEAN PATENT APPLICATION

(11) **EP 1 538 318 A1**
(43) Date of publication of application: **08.06.2005**
(21) Application number: 04257475.6
(22) Date of filing: 01.12.2004
(51) Int. Cl.: F02C 7/143, F02C 6/18

(54) **System and method for district heating with intercooled gas turbine engine**

(30) Priority: 05.12.2003 US 728415
(71) Applicant: GENERAL ELECTRIC COMPANY, Schenectady, NY 12345 (US)
(72) Inventor: Reale, Michael Joseph, Milford Ohio 45150 (US); Joshi, Narendra Digamber, Cincinnati Ohio 45241 (US)
(74) Representative: Pedder, James Cuthbert

(57) **Abstract**

A system (10) where heat energy is recovered from an intercooled gas turbine engine (11) comprises: (a) at least one gas turbine engine (11); (b) a compressed air stream (38) that receives energy from the at least one gas turbine engine (11); (c) at least one intercooler (30) that extracts the energy from the compressed air stream (38), and (d) at least one heating district (36). In this system (10), the at least one intercooler (30) and the at least one heating district (36) is connected by a fluid circulating loop (40) to transfer the extracted energy from the at least one intercooler (30) to the at least one heating district (36). Another embodiment involves a method for controlling the ratio of heat energy to output shaft energy removed from an operating intercooled gas turbine engine (11), which comprises the step of varying the amount of energy removed by at least one intercooler (30) from a flowing gas stream (38) of the gas turbine engine (11).

## Description

This invention relates to a system and method for recovering energy from intercooled gas turbine engines. The invention particularly relates to a system and method for using at least one intercooler to extract heat energy from the compressed air stream associated with a gas turbine engine and then transfer that heat energy to at least one heating district.

Gas turbine engines are used for a variety of purposes where large amounts of power are required at high efficiency. While gas turbine engines are commonly used in aircraft transportation because of these characteristics, they can also be used to provide power for other applications including marine craft and land-based electrical power generation. These engines are comprised of a series of stages that are operated on a single power shaft or can be operated using a plurality of shafts to efficiently provide high output energy. Typically, these stages include, in the order in which incoming air passes through them, a low pressure compressor, a high pressure compressor, a combustor, a high pressure turbine, and a low pressure turbine. See U.S. Pat. No. 5,553,448 to Farrel et al, issued September 10, 1996.

It has been found that it is possible to improve the efficiency of gas turbine engines by cooling the air flow, particularly, between the compression stages using a device called an intercooler. The intercooler removes energy from the flowing air stream, cooling it, while maintaining the densification or compression of the flowing gas as it flows from stage to stage of the gas turbine compressors.

Intercoolers are typically used between the low pressure compressor and the high pressure compressor to reduce the work needed for compression in the high pressure compressor. See U.S. Pat. No. 5,724,806 to Horner, issued March 10, 1998. This makes work available for net output and controls the temperature in the core engine (i.e., the high pressure compressor, the combustor, and the high pressure turbine stages). This keeps the operating temperature of the core engine from exceeding desired operating temperature limits of the core engine's components. Intercooling between these stages also results in a densified low temperature air stream entering the high pressure compressor which enhances the compressor's performance, as well as the overall efficiency of the engine.

By permitting a higher mass flow of air to be passed through the high pressure compressor, the intercooler also lowers the temperature at the compressor discharge. This reduces the temperature of turbine cooling air permitting higher turbine inlet temperatures. The net effect of all this is that the output of the gas turbine engine is approximately doubled compared to a simple cycle engine, with common efficiencies for intercooled engines being in excess of 40% and approaching 50%.

In addition to output shaft energy, intercooled gas turbine engines provide two other usable energy streams: (1) turbine exhaust gas energy; and (2) heat extracted by the intercooler from the compressed air stream. Turbine exhaust gas energy has typically been recovered by a heat recovery steam generator. An example of this can be seen at http://www.portalenergy.com/caddet/ee/R350.pdf. By contrast the heat extracted by the intercooler from the compressed air stream is commonly discharged to the atmosphere.

For economical operation of a gas turbine engine, it is desirable to maximize the efficiency of the fuel used in the generation process to maximize the economic effectiveness of the gas turbine engine. The intercooler typically removes or extracts on the order of about 5% to about 20% of the total input energy from the gas turbine engine. Because this input energy of a gas turbine engine is usually lost through the intercooling process, the recapture or recovery of this lost energy can contribute significantly to the overall engine efficiency of the gas turbine engine. Accordingly, it would be desirable to be able to recapture or recover this lost or wasted energy extracted by the intercooler for employment in a useful application to improve overall engine efficiency of the gas turbine engine.

An embodiment of this invention relates to an energy recovery system for recovering heat energy from an intercooled gas turbine engine and supplying it for use in district heating. This system comprises:
(1) at least one gas turbine engine;
(2) a compressed air stream that receives energy from the at least one gas turbine engine;
(3) at least one intercooler that extracts the energy from the compressed air stream; and
(4) at least one heating district.
In this system, a working fluid circulating loop connects the at least one intercooler and the at least one heating district to transfer the extracted energy from the at least one intercooler to the at least one heating district.

An alternative embodiment of this system involves a district heating system comprising at least one gas turbine engine, at least one intercooler for removing energy from at least one gas turbine engine, and at least one circulating loop for transferring the energy from the at least one intercooler to a heating district.

Another embodiment of this invention involves a method for district heating using rejected heat from the intercooler of an intercooler equipped gas turbine engine, which comprises the step of: providing a fluid circulating loop to supply the rejected energy to at least one heating district.

Another embodiment of this invention involves a method for supplying energy to a district heating system, which comprises the steps of: (a) removing with at least one intercooler energy from the gas flow stream of at least one gas turbine engine; (b) heating a working fluid with the removed energy; and (c) circulating the heated fluid through at least one district heating system to provide energy thereto.

Another embodiment of this invention involves a method for controlling the ratio of heat energy to output shaft energy removed from an operating intercooled gas turbine engine, which comprises the step of: varying the amount of energy removed by at least one intercooler from a flowing gas stream of the gas turbine engine.

The invention will now be described in greater detail, by way of example, with reference to the drawings, in which:-
FIG. 1 is a schematic of an embodiment of the system of this invention.
FIG. 2 is an enlarged representation of a portion of the system of FIG. 1.

As used herein, "district heating" usually refers to a method of supplying energy for various uses including space heating where the heat is distributed to multiple sites of use. It is often used in those situations where there is a demand for heat energy from multiple buildings, especially when they are located close together. For example, colleges and universities often accomplish space heating on a campus by having a central steam generating station and providing steam directly to the radiators in multiple buildings. Similarly, district heating can be accomplished in cities where buildings are close together and space heating is required. It should be further understood that a heating district is not limited to a group of buildings, but can also be defined as any venue requiring energy where the energy is made available by supplying it from a remote location by the circulation of a working medium or working fluid such as water, steam, gas, or some other heat transfer medium. For example, steam needed remotely on a ship for cleaning, heating cabins, cooking or other uses can constitute a heating district that could be supplied by the invention.

In intercooled gas turbine engines the intercooler is a heat exchanger. Intercoolers remove energy from the flowing gas stream of a gas turbine engine. The energy so removed is typically discharged from the intercooler to the earth's atmosphere, with the discharged energy often being referred to as heat energy, rejected energy or rejected heat energy. In a conventional intercooled gas turbine engine, the compressed air flow from a low pressure or booster compressor is cooled, for example, by water in the intercooler heat exchanger. This water is then channeled to a cooling tower where the water is cooled by evaporation to the atmosphere.

In various embodiments of the system and method of this invention as described hereafter, the heat from an intercooler heat exchanger can be recovered by a working medium. This heated medium can be channeled to a heating district that is comprised of one or more spaces where auxiliary heat exchangers are used to extract heat from the heated medium for various processes, including space heating. In some embodiments, the intercooler can be used in conjunction with an existing district heating system or as a part of a more complex system employing more than one source of energy for the heating district. To replenish or make up losses of the working medium that is circulated in the system, a reservoir can be provided to add working medium material to the circulating working medium returning from the heating district to the intercooler.

District heating has previously been accomplished by using the exhaust heat of gas turbine engines. However, the various embodiments of the system and method of this invention are uniquely and broadly directed at district heating with heat extracted by intercoolers from gas turbine engines. Indeed, the intercoolers are used in the various embodiments of the method and system of this invention for the purpose of extracting heat from compressed air stream of gas turbine engines, in addition to controlling the temperature and pressure of the compressed air stream of such engines.

For economically competitive operation of a gas turbine engine installation, it is desirable to maximize the efficiency of the fuel used in the generation process to maximize the economic effectiveness of the gas turbine installation. Because about 5% to about 20% of the input energy of a gas turbine engine is lost through the intercooling process, the recapture of this lost energy for useful purposes can contribute significantly to the overall fuel efficiency of the gas turbine engine. To maximize engine efficiency, capture or recovery of this rejected energy stream is therefore desirable. In addition, operators of such gas turbine engines would like to obtain the economic benefits of capturing or recovering this rejected energy from the intercooler. For example, gas turbine engines are used in power generation equipment for supplying electrical energy. The economic advantage in capturing or recovering the extra energy value of the fuel used in running such gas turbine engine powered electric generators could mean the difference between economic success and failure for the generation project.

The various embodiments of the system and method of this invention provide for the capture or recovery of the rejected heat from the intercooler of an intercooled gas turbine engine. In these various embodiments, the intercooler is configured to remove or extract heat from the gas stream of the gas turbine engine by using a working medium, typically called a working fluid, from a district heating system. This can lead to an increase in the overall operating efficiency of the gas turbine engine by capturing or recovering energy otherwise discharged or rejected to the atmosphere.

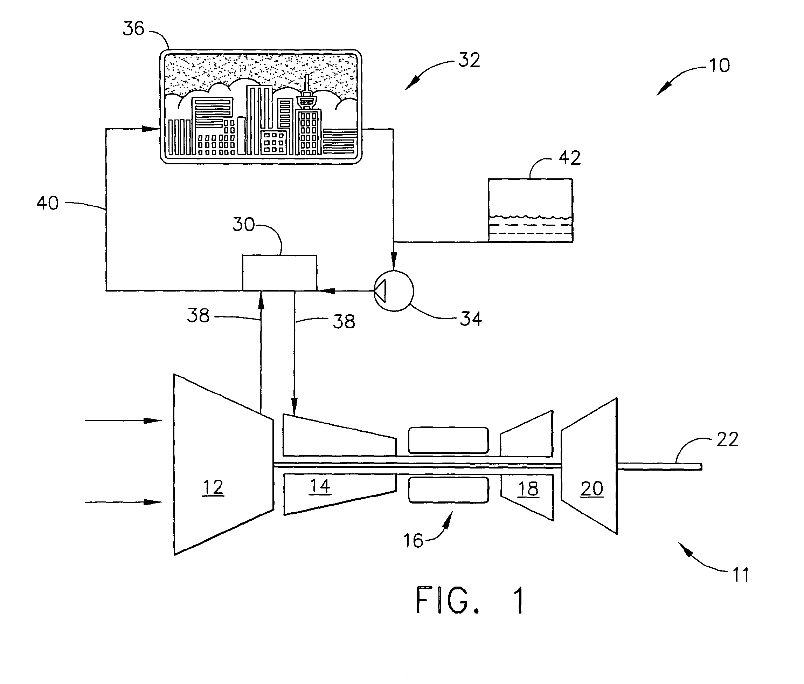

Referring to FIG. 1, one embodiment of this system indicated as 10 is shown schematically as including a gas turbine engine 11 having a low pressure or booster compressor 12, a high pressure compressor 14, a combustor 16, a high pressure turbine 18, and a low pressure turbine 20. System 10 also comprises an intercooler 30 in the form of a heat exchanger 30 that is fluidly connected at the outlet of the low pressure compressor 12 to receive the turbine engine compressed air stream 38 which is then returned to the inlet of high pressure compressor 14. The intercooler cools compressed air stream 38 with a working fluid such as water, thus extracting heat energy therefrom.

As shown in FIG. 1, system 10 further comprises a district heating loop 32 that includes a fluid circulation loop 40 that uses a pump 34 to cause the working fluid to circulate through the intercooler 30 and deliver the heat extracted from compressed air stream 38 to heating district 36. As also shown in FIG. 1, a reservoir of working fluid 42 can be provided that can be added to replenish and make up any losses in working fluid in the circulation loop 40, as needed.

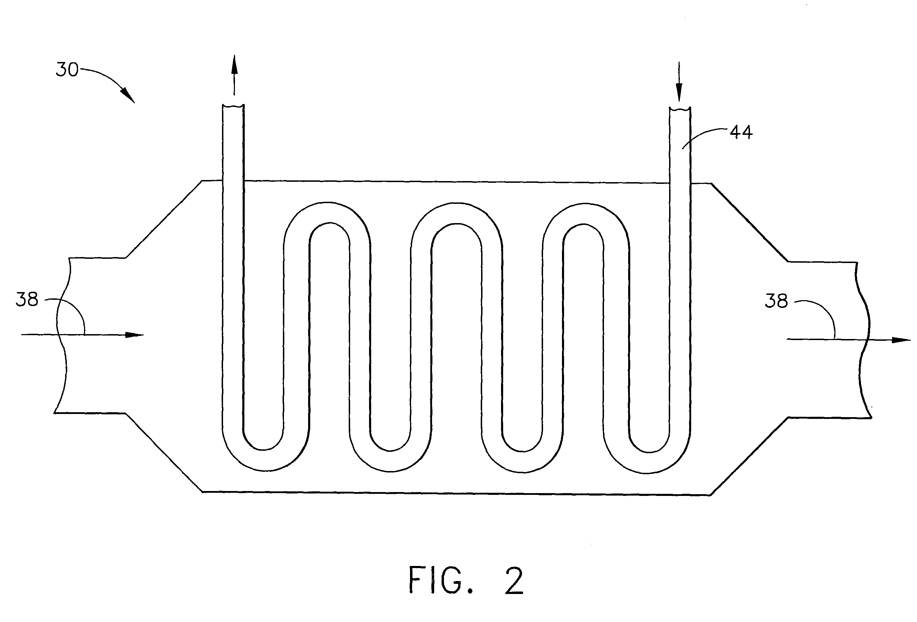

FIG. 2 shows the details of intercooler 30 of system 10 where compressed air stream 38 and fluid circulating loop 40 intersect. As shown in FIG. 2, intercooler 30 removes or extracts heat from the compressed air stream 38 as it flows from the low pressure compressor 12 and, after cooling, back to the inlet of the high pressure compressor 14. The heat energy extracted from the compressed air stream 38 is transferred to the working fluid indicated as 44 that circulates through circulating loop 40 of district heating system 32. This extracted heat is then delivered to heating district 36 where it can be used for space heating or other requirements of heating district 36. The working fluid 44 is then returned or recirculated by circulating loop 40 back to intercooler 30.

While FIG. 1 shows the intercooler 30 being disposed between the low pressure compressor 12 and the high pressure compressor 14, intercooler 30 can be positioned at any point where it is desirable to remove heat energy from gas turbine engine 11. In particular, intercooler 30 could be placed at any point with respect to gas turbine engine 11 where compressed air stream 38 cooling is desired or is advantageous so that district heating can be accomplished by the circulation of working medium 44 through the circulating loop 40 to transfer heat energy from the intercooler 30 to the heating district 36.

It will also be appreciated that any combination of intercoolers 30 can be used to cool compressed air stream 38 as desired and supply extracted heat to the heating district 36 via circulating loop 40. For example, a plurality of intercoolers 30 can be used to extract heat from compressed air stream 38 at a plurality of positions in the gas stream of the gas turbine engine. This plurality of intercoolers 30 can then be connected to a plurality of circulating loops 40, each connected to supply heat to a different heating district 36, or a different part of one heating district 36.

In another embodiment of system 10, the fluid circulating loop 40 can be connected to a previously existing district heating system 36 to replace a previous energy source.

In yet another embodiment of system 10, the fluid circulating loop 40 can be connected into a district heating system 36 comprising a plurality of sources of energy wherein at least one gas turbine engine 11 and at least one intercooler 30 are at least one source of heat energy.

In yet another embodiment of system 10, the fluid circulating loop 40 passing through the intercooler 30 can be connected with other sources of energy to provide energy to the district heating system 36 from a plurality of fuels or a plurality of energy generators powered by a plurality of fuels. In this embodiment, the at least one gas turbine engine 11 and the at least one intercooler 30 would be at least one of the energy sources.

The economic benefit of intercooler district heating can maximize revenue for the operator of the gas turbine engine 11. By adjusting the amount of energy taken out of the engine by the intercooler 30, the energy from the output shaft 22 (see FIG. 1) of the gas turbine engine 11 can be regulated. This allows the operator of the gas turbine engine 11 to maximize economic return by responding to the relative values of the products of the gas turbine engine 11, in this case, intercooler recovered heat vs. shaft output energy.

One such embodiment of the above system would be the operation of a gas turbine engine 11 for generating electricity. At various times of the year, the heat extracted from the intercooler 30 is of varying economic value, and the shaft output energy also varies in value. Therefore, within the operating limits of the gas turbine engine 11, it can be desirable to extract more (or less) heat energy, as opposed to output shaft energy. For example, in summer, the need for electricity for air conditioning is greater, but there is less need for heat energy to warm buildings, making the value of the electricity higher. Therefore, an operator would want to operate the gas turbine engine 11 to provide maximum shaft output to the electric generator, while removing an appropriate (and typically lesser) amount of energy with the intercooler 30, thus maximizing economic return. Conversely, in winter, the value of heat from the intercooler 30 is greater as there is a need for space heating from the heating district 36. Because the value of heat is greater, the demand or value of the electricity generated is typically less. Therefore, an operator would more likely want to operate the gas turbine engine 11 to recover more heat with the intercooler 30, while reducing the energy from output shaft 22 (thus leading to reduced electrical output) to maximize revenue from the system.

Accordingly, the ability to vary the ratio of heat energy to shaft energy can desirable. This can be accomplished by controlling the heat output from at least one intercooler 30, and consequently, controlling the temperature of the return of the gas stream 38 to the input of the high pressure compressor 14 (see FIG. 1). The temperature of the return gas directly corresponds to the amount of energy in the return turbine engine compressed air stream 38. The energy available in the compressed air stream 38 of the compressor directly affects the amount of energy available for shaft output energy at the output shaft 22. Using this method the ratio of the heat energy extracted by the intercooler 30 versus the mechanical output energy of the output shaft 22 can be controlled.

## Claims

1. An energy recovery system (10) comprising:
a) at least one gas turbine engine (10);
b) a compressed air stream (38) that receives energy from the at least one gas turbine engine (11);
c) at least one intercooler (30) that extracts the energy from the compressed air stream (38), and
d) at least one heating district:
**characterized by** a working fluid circulating loop (40) connecting the at least one intercooler (30) and the at least one heating district (36) to transfer the extracted energy from the at least one intercooler (30) to the at least one heating district (36).

2. The system (10) of claim 1 **characterized in that** the energy delivered to the heating district (36) is used for space heating.

3. The system (10) of any of claims 1 to 2 **characterized in that** it further comprises a reservoir of working fluid (42) to be added, as needed, to the fluid circulating loop (40).

4. The system of any of claims 1 to 3 **characterized in that** the fluid circulating loop (10) is connected to at least one previously existing district heating system (36).

5. The system (10) of any of claims 1 to 4 **characterized in that** it is connected to a district heating system (36) having a plurality of sources of energy.

6. The system (10) of any of claims 1 to 5 **characterized in that** the working fluid (40) is a member of the group consisting essentially of water, steam, polymeric fluid, and liquid phase metal.

7. A method for supplying energy to a district heating system (36), **characterized in that** it comprises the steps of: (a) removing with at least one intercooler (30) energy from the gas flow stream (38) of at least one gas turbine engine (11); (b) heating a working fluid (44) with the removed energy; and (c) circulating the heated fluid through at least one district heating system (36) to provide energy thereto.

8. The method of claim 7 **characterized in that** a fluid circulating loop (40) is used to circulate the working fluid (44).

9. The method of any of claims 7 to 8 **characterized in that** the fluid circulating loop (40) is connected to a plurality of energy sources.

10. A method for controlling the ratio of heat energy to output shaft energy removed from an operating intercooled gas turbine engine (11), **characterized in that** it comprises the step of: varying the amount of energy removed by at least one intercooler (30) from a flowing gas stream (38) of the gas turbine engine (11).
